# FASCICULE DE BREVET EUROPEEN

(11) **EP 2 792 660 B1**
(45) Date de publication et mention de la délivrance du brevet: **05.09.2018**
(21) Numéro de dépôt: 14163877.5
(22) Date de dépôt: 08.04.2014
(51) Int. Cl.: C04B 41/53, C11D 7/32, C23G 1/02, C11D 7/26

(54) **Produit pour l'élimination de résidus de sels de calcium insolubles**
Produkt zum Entfernen der Reste von unlöslichen Kalziumsalzen
Product for removing insoluble calcium salt residues

(30) Priorité: 16.04.2013 FR 1353444
(43) Date de publication de la demande: 22.10.2014
(73) Titulaire: CBA World S.à.r.l., 2449 Luxembourg (LU)
(72) Inventeur: Wayser, Barnabé, 75008 Paris (FR)
(74) Mandataire: Office Freylinger

(56) Documents cités:
- EP-A1- 2 439 261
- US-A- 5 669 980
- US-A- 5 672 279
- US-A1- 2007 164 258
- US-A1- 2009 208 763

## Description

La présente invention concerne un produit pour l'élimination de résidus de sels de calcium insolubles, tel que le carbonate de calcium. Plus particulièrement, le produit conforme à la présente invention est destiné au décapage en profondeur de dépôts secs ou humides de ciment, de béton et de laitances présents sur tous types de surfaces, telles que les surfaces métalliques, plastiques, en caoutchouc ou minérales et également les surfaces peintes.

On sait que, pour éliminer de tels résidus et dépôts, on peut utiliser des acides forts, tels que l'acide chlorhydrique, l'acide sulfamique ou l'acide phosphorique. Cependant, l'utilisation de tels acides forts est dangereuse pour les opérateurs, du fait de leur corrosivité et des vapeurs nocives qu'ils émettent. De plus, ces acides forts attaquent non seulement les résidus, mais également les surfaces qui les portent, en particulier les surfaces métalliques. En ce qui concerne l'environnement, l'utilisation de tels acides forts est délicate, notamment pour le recyclage de l'eau contaminée par des traces d'acides dangereux, par exemple dans le cas d'une centrale à béton où l'eau est réutilisée pour faire du béton.

Des acides moins dangereux, comme l'acide citrique, l'acide glycolique (voir US 5 451 264) ou encore l'acide alcane sulfonique (voir FR 2 939 147) sont aussi parfois utilisés, mais ils restent trop corrosifs pour un usage sans danger. De plus, l'acide glycolique provoque sur les surfaces décapées un blanchiment inesthétique et difficile à éliminer et contient une impureté classée CMR (cancérigène, mutagène, reprotoxique).

Pour remédier à ces inconvénients, il a été proposé, par exemple par les documents US 5 672 279 et US 2006/0063689, de remplacer de tels acides forts par du chlorhydrate d'urée peu corrosif ou alors de mélanger plus communément des acides forts avec des inhibiteurs de corrosion. Les produits obtenus restent corrosifs avec une efficacité très limitée, la qualité du décapage restant superficielle et le temps de décapage étant long.

Il a également été proposé par le document EP 2 439 261, comme alternative moins dangereuse, d'additionner une faible proportion d'acide organique faible (c'est-à-dire un acide dont la constante de dissociation en solution est seulement de l'ordre de quelques pourcents) à du chlorhydrate d'urée. Ce document a montré qu'une faible proportion d'un acide organique faible de petite masse molaire (inférieure à 80 g.mol⁻¹) permet d'augmenter de façon significative l'action de décapage du chlorhydrate d'urée et de réduire le temps d'élimination des résidus de béton et de ciment. L'acide organique faible de petite masse molaire pénètre dans ces résidus entraînant avec lui le chlorhydrate d'urée qui exerce un effet déstructurant de ces résidus en surface et en profondeur.

La présente invention a pour objet d'améliorer encore la qualité du décapage du béton et du ciment en réduisant de plus le temps d'action.

A cette fin, selon l'invention, le produit de décapage pour l'élimination de sels de calcium insolubles ou pour le dégraissage d'outils et d'équipements, comportant un acide organique faible de masse molaire inférieure à 80 g.mol⁻¹ est remarquable en ce que ledit acide organique faible est l'acide glycolique et en ce qu'il comporte de plus de l'urée, dans une proportion molaire, par rapport audit acide organique faible comprise entre 1 : 2 et 1 : 6, le produit de décapage se présentant sous la forme d'une solution aqueuse dont 100 g comportent au moins approximativement 50 g d'acide glycolique (soit 0.625 mol) et 10 g d'urée (soit 0.167 mol).

En effet, le demandeur a trouvé que le décapage de résidus de sels de calcium insolubles pouvait être amélioré en utilisant une quantité importante d'acide glycolique comme acide organique faible et en contrant ses effets négatifs, telles que la forte corrosivité et le blanchiment, par l'addition d'une faible quantité d'urée. Grâce au caractère faiblement basique de l'urée, son ajout à l'acide glycolique, même en faible quantité, est suffisant pour obtenir un produit de décapage moins corrosif, d'un pH d'environ égal à 3, tout en conservant la propriété des acides organiques faibles de pénétrer et de décaper en profondeur les résidus de sels de calcium insolubles. Le produit est ainsi beaucoup moins dangereux d'utilisation. En d'autres termes, le demandeur a trouvé que, dans certaines conditions, il existe un effet de synergie entre l'urée et l'acide glycolique.

Pour expliquer cette synergie, le demandeur pense (sans que la validité de la présente invention soit liée à cette explication) que la faible corrosivité du mélange et la faible masse molaire de l'acide glycolique (inférieur à 80 g.mol⁻¹) et de l'urée (60,06 g.mol⁻¹) permettent au mélange de ces produits de pénétrer en profondeur les résidus de sels de calcium insolubles sans réagir immédiatement avec eux. Ainsi, l'acide organique faible et l'urée sont amenés profondément à l'intérieur desdits résidus et peuvent exercer, en coopération, un effet déstructurant desdits résidus depuis le coeur de ceux-ci. La proportion importante d'acide organique faible permet d'aller encore plus en profondeur et d'obtenir un effet plus déstructurant de ces résidus par rapport aux autres produits connus ne comportant qu'une faible quantité d'acide organique faible.

De plus, la présence de l'urée permet, sur les surfaces décapées, de supprimer le blanchiment inesthétique et difficile à éliminer, provoqué par certains acides organiques faibles.

Le demandeur a également observé que, dans ces proportions, le produit de décapage permettait, en plus, de nettoyer et décaper les huiles ou résidus gras communément utilisés pour démouler ou décoffrer le béton ou pour l'entretien des équipements utilisés dans la construction.

Selon l'invention, ledit acide organique faible est l'acide glycolique, de préférence purifié, c'est-à-dire sans impureté CMR présente généralement dans l'acide glycolique non purifié. Le produit ainsi obtenu ne fait alors courir aucun risque CMR à l'utilisateur.

De façon optimisée, la proportion molaire de l'urée par rapport à l'acide glycolique est au moins approximativement égale à 1 : 4.

Le produit selon l'invention se présente sous la forme d'une solution aqueuse. 100 g de cette solution comportent au moins approximativement 50 g d'acide glycolique purifié (soit 0.625 mol) et 10 g d'urée (soit 0.167 mol), ce qui correspond à un rapport molaire de 1 : 3,74.

De façon avantageuse la solution aqueuse se présente sous une forme légèrement gélifiée, par exemple par l'addition d'un produit gélifiant tel que ceux connus sous les noms commerciaux METHOCEL et KELZAN AR. Cette forme gélifiée permet une meilleure application du produit sur la zone à décaper en évitant les écoulements et les pertes de produit. Celui-ci sera donc présent seulement sur la zone à décaper et pourra y rester pour agir et pénétrer efficacement en profondeur. L'efficacité est ainsi accrue et un meilleur rendement est obtenu par rapport aux produits liquides actuellement utilisés.

Eventuellement, la tension superficielle du produit peut être réglée par un agent tensioactif, par exemple de type alcool éthoxylique.

Un produit tel que décrit précédemment peut, de plus, être avantageusement utilisé pour le dégraissage d'outils et d'équipements. Il a, en effet, été observé par le demandeur qu'avec de telles proportions d'acide organique faible et d'urée le produit de décapage avait également des propriétés de dégraissage, avantageux pour nettoyer les huiles et résidus gras déposés sur les outils et les équipements utilisés. Ce produit peut être utilisé dans un cadre industriel ou dans le cadre de chantiers et également le cadre d'une activité de bricolage.

Ainsi, de ce qui précède, on constate que la présente invention concerne un produit de décapage efficace et non corrosif. Ce produit est apte à éliminer des résidus, des efflorescences ou des amas de béton ou de ciment en surface et surtout en profondeur accrochés à toutes sortes de surfaces, et particulièrement des surfaces de béton et des surfaces métalliques. Il est également apte à nettoyer et décaper les huiles ou résidus gras communément utiliser pour démouler ou décoffrer le béton ou pour l'entretien des équipements utilisés dans la construction. Sans dommage pour les surfaces à décaper, le produit de l'invention peut être utilisé en toute sécurité par les opérateurs pour décaper les constructions en béton, ainsi que les outils et équipements utilisés pour ces constructions.

A toutes fins utiles, on remarquera que :
- le document US 5 669 980 concerne un décapant spécifique pour « éliminer le silicium, des métaux et leurs oxydes de la surface d'un alliage d'aluminium et de silicium ». Rien dans ce document n'indique que ce décapant pourrait être utilisé pour éliminer des résidus de béton. De plus, la composition de ce décapant spécifique comporte obligatoirement trois acides différents (et non pas uniquement un acide organique faible), et, facultativement un composé contenant de l'urée ; et
- le document US 2007/0164 258 concerne un inhibiteur de corrosion (et non pas un décapant de béton) comportant obligatoirement un composant ammoniaqué et de l'urée. En revanche, cet inhibiteur de corrosion peut ne pas comporter d'acide.

## Revendications

1. Produit de décapage pour l'élimination de sels de calcium insolubles ou pour le dégraissage d'outils et d'équipements comportant un acide organique faible de masse molaire inférieure à 80 g.mol⁻¹ qui est l'acide glycolique, **caractérisé en ce que** le produit de décapage comporte de l'urée, **en ce que** la proportion molaire de l'urée par rapport à l'acide glycolique est comprise entre 1 : 2 et 1 : 6, et **en ce que** le produit de décapage se présente sous la forme d'une solution aqueuse dont 100 g comportent au moins 50 g d'acide glycolique (soit 0.625 mol) et 10 g d'urée (soit 0.167 mol).

2. Produit de décapage selon la revendication 1,
**caractérisé en ce que** la proportion molaire de l'urée par rapport à l'acide glycolique est au moins égale à 1 : 4.

3. Produit de décapage selon l'une des revendications 1 ou 2,
**caractérisé en ce qu'**il se présente sous la forme d'une solution aqueuse gélifiée.

4. Produit de décapage selon l'une des revendications 1 à 3,
**caractérisé en ce qu'**il comporte un agent tensioactif.

5. Utilisation du produit de décapage selon l'une des revendications 1 à 4 pour l'élimination de sels de calcium insolubles.

6. Utilisation du produit de décapage selon l'une des revendications 1 à 4 pour le dégraissage d'outils et d'équipements.

## Patentansprüche

1. Ablösemittel zur Entfernung unlöslicher Calciumsalze und zum Entfetten von Werkzeugen und Geräten, welches eine schwache organische Säure mit einer Molmasse von weniger als 80 g.mol⁻¹ aufweist, bei der es sich um Glycolsäure handelt, **dadurch gekennzeichnet, dass** das Ablösemittel Harnstoff aufweist, dadurch, dass der Molanteil des Harnstoffs im Verhältnis zur schwachen organischen Säure 1:2 bis 1:6 beträgt, und dadurch, dass das Ablösemittel in Form einer wässrigen Lösung vorliegt, von welcher 100 g mindestens 50 g Glycolsäure (entsprechend 0,625 mol) und 10 g Harnstoff (entsprechend 0,167 mol) aufweisen.

2. Ablösemittel nach Anspruch 1,
**dadurch gekennzeichnet, dass** der Molanteil des Harnstoffs im Verhältnis zur Glycolsäure mindestens 1:4 beträgt.

3. Ablösemittel nach einem der Ansprüche 1 oder 2, **dadurch gekennzeichnet, dass** es in Form einer gelierten wässrigen Lösung vorliegt.

4. Ablösemittel nach einem der Ansprüche 1 bis 3, **dadurch gekennzeichnet, dass** es ein Tensid aufweist.

5. Verwendung des Ablösemittels nach einem der Ansprüche 1 bis 4 zum Entfernen von unlöslichen Calciumsalzen.

6. Verwendung des Ablösemittels nach einem der Ansprüche 1 bis 4 zum Entfetten von Werkzeugen und Geräten.

## Claims

1. A pickling agent for removing insoluble calcium salts or for degreasing tools and equipment comprising a weak organic acid of a molar mass of less than 80 g·mol⁻¹ which is glycolic acid, **characterised in that** the pickling agent comprises urea, **in that** the molar proportion of urea relative to glycolic acid is between 1:2 and 1:6, and **in that** the pickling agent takes the form of an aqueous solution, 100 g of which comprise at least 50 g glycolic acid (namely 0.625 mol) and 10 g urea (namely 0.167 mol).

2. A pickling agent according to claim 1,
**characterised in that** the molar proportion of urea relative to glycolic acid is at least equal to 1:4.

3. A pickling agent according to one of claims 1 or 2, **characterised in that** it takes the form of a gelled aqueous solution.

4. A pickling agent according to one of claims 1 to 3, **characterised in that** it comprises a surfactant.

5. Use of a pickling agent according to one of claims 1 to 4 for removing insoluble calcium salts.

6. Use of a pickling agent according to one of claims 1 to 4 for degreasing tools and equipment.
